# EUROPEAN PATENT SPECIFICATION

(11) **EP 3 499 029 B1**
(45) Date of publication and mention of the grant of the patent: **12.02.2020**
(21) Application number: 17207091.4
(22) Date of filing: 13.12.2017
(51) Int. Cl.: F03D 80/50, F03D 9/25

(54) **METHOD FOR REMOVING OR INSTALLING A STATOR SEGMENT OF A GENERATOR BEING INSTALLED IN A NACELLE OF A WIND TURBINE**
VERFAHREN ZUM AUSBAU ODER EINBAU EINES STATORSEGMENTS EINES GENERATORS, DER IN EINE GONDEL EINER WINDTURBINE EINGEBAUT WIRD
PROCÉDÉ DE DÉSINSTALLATION OU D'INSTALLATION D'UN SEGMENT DE STATOR D'UN GÉNÉRATEUR INSTALLÉ DANS UNE NACELLE D'UNE ÉOLIENNE

(43) Date of publication of application: 19.06.2019
(73) Proprietor: Siemens Gamesa Renewable Energy A/S, 7330 Brande (DK)
(72) Inventor: Christensen, Nicolaj Nissen, 8270 Højbjerg (DK); Moeldrup, Thomas Barslev, 8740 Brædstrup (DK); Troelsen, Henrik Jason, 7400 Herning (DK)
(74) Representative: Aspacher, Karl-Georg

(56) References cited:
- DE-A1-102005 025 646
- JP-A- 2015 151 989
- JP-A- 2017 049 130
- KR-B1- 101 021 447

## Description

### Field of invention

The present invention relates to the field of removing or installing a stator segment of a generator being installed in a nacelle of a wind turbine. Particularly, the present invention relates to a method for removing or installing a stator segment of a generator being installed in a nacelle of a wind turbine and an exchange device for removing or installing a stator segment of a generator being installed in a nacelle of a wind turbine.

### Art Background

Today the stator segments in the generator of a wind turbine are exchanged by dismounting the generator and the stator segment in a workshop.

For example today a method for removing a stator component from a generator being installed at a nacelle of a wind turbine is known. The method comprises transferring the stator component from a stator frame structure of the generator to a component exchange tool which is installed at a hub of the wind turbine, handling over the stator component from the exchange tool to a handling equipment, and removing the stator component from the hub and/or from the component exchange tool to a predetermined unloading region by controlling the handling equipment.

US 2012/0073118 A1 discloses a module-handling tool for facilitating installation, servicing, and/or dismantling of an electromagnetic rotary machine, such as an electrical power generator electric motor, having a modulized active portion.

In one embodiment, the module-handling tool is configured for a machine having a modulized stator having a number of removable modules.

JP 2017 049130 A discloses a blade inspection device that can conduct an inspection over a broad range in a length direction of a blade. The blade inspection device for inspecting a blade of a windmill comprises an inspection unit for inspecting the blade, a rope for hanging the inspection unit from a structure of the windmill, a winch adapted to adjust rope length to thereby enable the inspection unit to ascend and descend and a negative pressure generation unit for generating a negative pressure between a surface of the blade and the blade inspection device.

JP2015 151989 A discloses a wind power generator maintenance apparatus capable of realizing size reduction and facilitating securing an installation space. The maintenance apparatus of a wind power generator comprises a hoisting wire for moving up/down a target equipment in front of the hub, a pulley for guiding the hoisting wire, at least one gib having a tip end portion to which the pulley is attached and a base portion attached to the hub so as to be rotatable about a spindle within a vertical plane including the rotary shaft and a support wire attached to the tip end portion of the gib. The support wire supporting the gib at a forward tilting attitude at which the tip end portion is located forward and upward of the base portion during moving up or down the target equipment in front of the hub.

KR 101021447 B1 discloses a method for lifting and lowering a rotor in a wind turbine generator of a wind power generator, in which a rotor head rotating with wind power and drives a generator installed in a nacelle to generate power. A temporary winch rail is mounted on a rail support portion previously formed in the rotor head. A temporary winch is installed on the temporary winch rail. A maintenance management hatch formed on the rotor head is opened and an exchanging device to be attached and detached from the opening of the maintenance management hatch is raised or lowered by the hypothetical winch.

The costs for maintenance of a wind turbine are crucial from the economic perspective of the wind turbine. Further, the time spent on maintenance of the wind turbine and hence the downtime of the wind turbine is a key factor for the operational costs of the wind turbine.

### Summary of the Invention

It may be an objective of the present invention to provide a method for removing or installing a stator segment of a generator of a wind turbine, wherein the method and the exchange device is able to reduce maintenance and operational costs.

This objective may be solved by the method for removing or installing a stator segment of a generator being installed in a nacelle of a wind turbine, and an exchange device for removing or installing a stator segment of a generator being installed in a nacelle of a wind turbine according to the independent claims.

According to a first aspect of the present invention, a method for removing or installing a stator segment of a generator being installed in a nacelle of a wind turbine is described. The method comprises coupling a lifting mechanism of an exchange device to a plurality of lifting ropes, wherein the plurality of lifting ropes is fixed to a hub of the wind turbine, self-lifting the exchange device to the hub by the lifting mechanism, fastening the exchange device to the hub, rotating the hub such that the exchange device is aligned with the stator segment to be removed, and handling the stator segment between a stator of the generator and the exchange device for removing or installing the stator segment.

The stator segment may be any part of the generator which is mechanically connected directly or indirectly to the stator respectively the stator frame structure. Particularly, the stator segment comprises at least one stator winding. This may provide the advantage that with the described method a type of stator segment which may have to be replaced more often than other components of the stator because the stator winding is more sensitive to failure than the other components of the stator, may easily be exchanged.

In this context it should be understood that in normal generator operation the stator winding is used for picking up a time alternating magnetic flux and an overall output current of the generator. For this reason, a plurality of stator segments are provided which are arranged around a rotational axis of the generator, wherein each stator segment comprises at least one stator winding in which during normal operation of the generator magnetic induction takes place.

According to this document the term "exchange device" may particularly denote any drivable mechanical structure which is configured for coupling a lifting mechanism, temporally receiving and/or accommodating the stator segment and handling the stator segment between the stator and the exchange device. Thereby, the exchange device may be adapted to the shape of the stator segment which is to be removed or installed. The exchange device may particularly be an exchange device as described below with reference to several embodiments.

Furthermore, the term "coupling a lifting mechanism of the exchange device to a plurality of lifting ropes" may particularly denote that the lifting ropes are either part of the exchange device and hence are already fixed to the exchange device or that the exchange device comprises mechanical means for fastening the lifting ropes to the exchange device.

Therefore, the term "fixed to the hub of the wind turbine" may particularly denote that one end of each lifting rope is coupled to the exchange device and another end of each lifting rope is coupled to the hub.

The term "lifting rope" may particularly denote a rope or a belt.

The term "self-lifting" may particularly denote that the exchange device comprises a lifting mechanism which may be able to lift the exchange device from a lower level to the hub level of the wind turbine without any need of an external force as for example a rope winch or a crane on the wind turbine or any other external equipment. Hence, the mechanical mechanism for lifting the exchange device may particularly be part of the exchange device.

The term "lifting mechanism" may particularly denote any mechanism which may be provided at the exchange device, and which is able to climb the exchange device to the hub. Particularly, the lifting mechanism may be at least one winch which may coil the lifting rope such that the exchange device is lifted to the hub of the wind turbine.

Further, the hub may particularly denote a central portion of the wind rotor which comprises strong mechanical connection means for attaching or fixing (the radially inner end of) the rotor blades. Thereby, the rotor blades are attached in such a manner that they are rotatable around their longitudinal axis for allowing a rotor blade pitching. In other words, the term hub may denote a structural component of the wind turbine which is mechanically and functionally connected in between the blades(s) and the rotor assembly of the generator. Specifically, the hub may be used for mechanically transmitting a momentum of force from the wind driven blade(s) to the rotor assembly in order to drive the rotor assembly. Typically, the hub is located outside from the nacelle.

Furthermore, the term "fastening to the hub" may particularly denote that the respective assembly, i.e. the exchange device, is fastened to the hub such that it rotates together with the hub when the hub is rotated around an axis of rotation of the wind rotor of the wind turbine. In this context a wind rotor comprises the hub and the rotor blades extending radially from the hub. In normal operation of the wind turbine a rotation of the hub is caused by wind driving the wind rotor. For carrying out maintenance, the hub may also be rotated by a special turning device which engages with a rotor assembly of the generator and/or a shaft rotatively connecting the hub with the rotor assembly.

Furthermore, the term "rotating the hub" may denote that the hub is rotated for example by the rotor turner gear which may be able to turn the rotor when there is no wind or even when the rotor has to be turned against an external wind force for example for maintenance procedures.

Furthermore, the term "such that the exchange device is aligned with the stator segment to be removed" may particularly denote that the exchange device fastened to the hub is at the same angular position as the stator segment which has to be removed or at the same angular position as where the stator does not comprise a stator segment.

Furthermore, the term "handling the stator segment between the stator of the generator and the exchange device" may particularly denote that on the one hand the exchange device may enabling a handling of the stator segment from the exchange device to the stator and on the other hand the exchange device may enable an handling of the stator segment from the stator to the exchange device.

According to a further aspect of the present invention, an exchange device for removing or installing a stator segment of a generator being installed in a nacelle of a wind turbine is described. The exchange device is able to perform the method as previously described. Furthermore, the exchange device comprises a lifting mechanism for self-lifting the exchange device to a hub of the wind turbine, wherein the lifting mechanism is configured for being coupled to a plurality of lifting ropes fixed to the hub.

Hence, the exchange device may be designed so it can drag out the stator segment of the stator frame structure without dismounting the generator from the rest of the turbine. This operation can be done without the use of a jack up ship which may particularly save time and money. Furthermore, the exchange device may be automated so no technician has to be near the exchange device when the exchange device is operating, and no extra rigging needs to be done in the turbine when the stator segment has to be replaced.

According to a further exemplary embodiment of the present invention, the method further comprises providing an lifting crane fixed to the hub, lifting the plurality of lifting ropes to the hub by using the lifting crane of the wind turbine, fastening each of the plurality of lifting ropes to a respective one of a plurality of hooks, and/or removing the lifting crane. Furthermore, each of the plurality of hooks is provided on the hub.

The lifting crane (also called act safe) may particularly be fixed to the hub just before the lifting crane is used for lifting the lifting ropes. However, it may be understood by a person skilled in the art that the lifting crane may in contrast be permanently installed to the hub. The lifting crane may particularly be an act safe.

Lifting the plurality of lifting ropes to the hub by using the lifting crane may particularly comprise fixing the free ends of the lifting ropes not coupled to the exchange device, to an auxiliary rope of the lifting crane.

Fastening each of the plurality of lifting ropes to a respective one of a plurality of hooks may comprise unfastening each lifting rope from the auxiliary rope and coupling each lifting rope to a respective hook.

The plurality of hooks may be permanently fixed to the hub.

It may further be mentioned that the lifting ropes are fastened to the hooks particularly when the rotor is in a position such that the hooks are positioned vertically under the axis of rotation of the rotor (i.e. in a 6 o'clock position).

According to a further exemplary embodiment of the present invention, fastening the exchange device to the hub comprises mounting the exchange device on at least one flange, wherein the at least one flange is provided on the hub.

The at least one flange is provided on the hub may particularly denote that the flange may be an integral part of the hub. Additionally, the flange may be surface treated on a surface being determined to be the contact surface with respect to the exchange device when being mounted to the hub.

Mounting the exchange device on at least one flange may particularly comprise fixing the exchange device to the flange by at least one screw or fastening bolt.

According to a further exemplary embodiment of the present invention, handling the stator segment between a stator of the generator and the exchange device comprises mounting at least two fork guides on a stator frame structure such that the at least two fork guides are spaced apart from each other by the same distance as at least two fork elements. Furthermore, the exchange device comprises the at least two fork elements which are distanced to each other, and the stator comprises the stator frame structure and the stator segment.

The stator may particularly comprise the stator frame structure and the above-described stator segment. The stator frame structure may particularly be the stationary part of the stator which is permanently mounted to the shaft of the wind turbine. The stator frame structure may particularly provide fastening surfaces and/or fastening means for fastening the stator segment to the stator frame structure. Particularly, the stator may comprise more than one stator segment. Particularly, the stator may comprise six stator segments each extending over a rotational extension of an angle of 60° such that the six stator segments together form the entire stator comprising the stator windings.

The two fork elements may particularly be two posts which are fixed to the exchange device by a linear guideway respectively a stator segment sledge. The two fork elements may particularly be distanced to each other and may particularly be extendible simultaneously and linearly.

Each fork guide may particularly be pencil-shaped with a pointed extension and a flange at the other end. The fork guide may particularly be mounted to the stator frame structure by two screws fastening the flange of the fork guide to the stator frame structure.

Mounting at least two fork guides on a stator frame structure such that the at least two fork guides are spaced apart from each other by the same distance as at least two fork elements may comprise fixing the two fork guides by respective two screws or fastening bolts to the stator frame structure such that each fork guide is unmovably mounted to the stator frame structure. The distance between the two mounted fork guides and the distance between the two fork elements of the exchange device may particularly be equal.

According to a further exemplary embodiment of the present invention, handling the stator segment between a stator of the generator and the exchange device further comprises inserting at least two fork elements into the stator segment by feeding the at least two fork elements through a front plate of the stator segment, mounting an interface clamp to the at least two fork elements such that the interface clamp interconnects the respective adjacent ends of the at least two fork elements. Furthermore, the exchange device comprises the at least two fork elements which are distanced to each other, and the stator comprises the stator frame structure and the stator segment which comprises a front plate and a back plate by which the stator segment is mounted to the stator frame structure.

The stator segment may particularly be mounted to the stator frame structure by the front plate and the back plate. The terms "front plate" and "back plate" may not be seen as limiting to a respective spatial arrangement but may further emphasize that the front plate and the back plate are distanced to each other in a direction which is parallel to the extension direction of the axis of rotation of the wind turbine rotor.

Inserting at least two fork elements into the stator segment by feeding the at least two fork elements through a front plate of the stator segment may be allowed by corresponding through holes in the front plate. Therefore, each fork element may be guided through a respective through hole in the front plate. However, it may be understood that the two fork elements may also be guided together through one through hole in the front plate being big enough to run the two fork elements through the one through hole at the same time.

The interface clamp may particularly be two-parted such that the free ends of the two fork elements are clamped between two corresponding parts of the interface clamp. Particularly, the interface clamp may comprise an upper part and a lower part. The terms "upper part" and "lower part" may not be seen as limiting to a respective spatial arrangement but may further emphasize that the upper part and the lower part are distanced with respect to each other along a direction which is perpendicular to the axis of rotation of the wind turbine rotor, i.e. the upper part is distanced farer away from the axis of rotation of the wind turbine rotor than the lower part.

Mounting an interface clamp to the at least two fork elements such that the interface clamp interconnects the respective adjacent ends of the at least two fork elements may comprise fastening the two above-described corresponding parts, i.e. the upper part and the lower part, of the interface clamp together.

The free end of the fork element may particularly be the end of the fork element which is, in an extended position, not in contact with the exchange device, and which is inserted into the stator segment.

According to a further exemplary embodiment of the present invention, handling the stator segment between a stator of the generator and the exchange device further comprises fastening the stator segment to at least two fork elements of the exchange device, and sliding the stator segment into the exchange device by the at least two fork elements.

Fastening the stator segment to at least two fork elements of the exchange device may particularly comprise fastening the stator segment to be exchanged to the two fork elements by an intermediate part and by screws or fastening bolts such that the stator segment is unmovable relatively to the two fork elements.

Sliding the stator segment into the exchange device by the at least two fork elements may particularly comprise uniformly pulling the two fork elements into the exchange device along the linear guideway. After sliding the stator segment into the exchange device the entire stator segment may be received inside the exchange device.

According to a further exemplary embodiment of the present invention, fastening the stator segment to at least two fork elements of the exchange device comprises removing a plurality of bolts which are fastening a back plate to a stator frame structure such that at least two bolts remain for fastening the back plate to the stator frame structure, providing a contact between the two fork guides and the two fork elements, respectively, fastening an interface clamp to the ends of the two fork elements which are located inside the stator segment, fastening the back plate to the interface clamp, and subsequently unfastening the remaining at least two bolts which are fastening the back plate to the stator frame structure. Furthermore, the stator comprises the stator frame structure and the stator segment which comprises a front plate and a back plate by which the stator segment is mounted to the stator frame structure.

Removing a plurality of bolts which are fastening a back plate to a stator frame structure such that at least two bolts remain for fastening the back plate to the stator frame structure may particularly ensure that the stator segment is still be hold/fixed by the back plate to the stator frame structure. The exact number of bolts which may be left connected to the back plate may particularly depend on the weight of the stator segment respectively on the weight which may be carried by one bolt, i.e. on the used bolts.

Providing a contact between the two fork guides and the two fork elements, respectively, may particularly denote that the free end of the fork element may be provided with an opening which may be brought in contact with the fork guide. Therefore, the opening on the free end of the fork element is engaged with the pointed free end of the fork guide.

Fastening the back plate to the fork elements may particularly include a fastening of the interface clamp to the at least two fork elements and subsequently fastening the interface clamp having a planar contact surface to the back plate.

Subsequently unfastening the remaining at least two bolts which are fastening the back plate to the stator frame structure may particularly denote that after removing the at least two bolts, the back plate may solely be supported by and fixed to the fork elements. Hence, the back plate may be supported via the fork elements by the exchange device, and no longer by the stator frame structure. Therefore, the weight of the back plate may be supported solely be the fork elements.

According to a further exemplary embodiment of the present invention, fastening the stator segment to at least two fork elements of the exchange device further comprises fastening a front plate of the stator segment to a base plate of the exchange device such that the at least two fork elements support the stator segment, and subsequently unfastening the front plate from the stator frame structure.

The exchange device may particularly further comprise a base plate which is fixed to an opposite end of at least two the fork elements, and which may be moveable along the linear guideway together with the at least two fork elements. The base plate may particularly be a part of a stator segment sledge being a structure which enables a sliding of the at least two fork elements along the linear guideway. Furthermore, the base plate may particularly comprise a planar mounting surface being mountable to the front plate of the stator segment.

Fastening a front plate of the stator segment to a base plate of the exchange device such that the at least two fork elements support the stator segment may particularly comprise screwing or bolting the front plate and the base plate together by at least one screw or fastening bolt.

Subsequently unfastening the front plate from the stator frame structure may particularly ensure that, at each moment of the method, the front plate is fastened either to the stator frame structure or to the at least two fork elements.

According to a further exemplary embodiment of the present invention, the above-described method further comprises turning the rotor such that the exchange device is aligned vertically under the axis of rotation of the rotor, unfastening the exchange device from the hub, and/or roping down the exchange device together with the stator segment by the plurality of lifting ropes.

Turning the rotor such that the exchange device is aligned vertically under the axis of rotation of the rotor may particularly denote that the rotor is turned, for example by the rotor turner gear, to a 6 o'clock position. Therefore, the lifting ropes may hang from the hub to the ground vertically. This may ensure a safe and uncomplicated roping down of the exchange device.

Unfastening the exchange device from the hub may particularly comprise turning off the screws coupling the exchange device to the flange provided at the hub.

Roping down the exchange device together with the stator segment by the plurality of lifting ropes may be performed opposite to the lifting of the exchange device as described above. The roping down may for example be performed by a plurality of winches.

According to a further exemplary embodiment of the present invention, the exchange device further comprises a plurality of lifting ropes for fixing the exchange device to a hub of the wind turbine, fastening means for fastening the exchange device to the hub, and at least two fork elements for handling the stator segment between a stator of the generator and the exchange device.

The plurality of lifting ropes may particularly be at least three fixing ropes, two fixed at one end of the exchange device and one fixed at another end of the exchange device being opposite the one end of the exchange device. Each lifting rope may particularly be fixed to the exchange device by a winch such that the winch may unwind or wind up the fixing rope.

The fastening means for fastening the exchange device to the hub may particularly be a planar mounting surface which may correspond to the flange at the hub to which the exchange device is meant to be fixed at the hub.

The two fork elements may particularly be two posts which are fixed to the exchange device by a linear guideway respectively by a stator segment sledge. The two fork elements may particularly be distanced to each other and may particularly be extendible simultaneously and linearly.

According to a further exemplary embodiment of the present invention, the lifting mechanism comprises a plurality of winches, wherein each winch is fixed to the exchange device.

The winches may particularly be mounted to the exchange device at for example three positions of the exchange device such that the exchange device may be held in a stable position during a winding up of the exchange device.

According to a further exemplary embodiment of the present invention, the exchange device further comprises at least one camera for monitoring a positioning of the exchange device relative to the hub.

Providing at least one camera may particularly ensure that an exact alignment between the exchange device and the hub may be monitored without the present of a technician on the exchange device.

The method for exchanging a stator segment my particularly comprise mounting the exchange device on a compensating platform on a vessel, positioning the rotor with an access hatch at a 6 o'clock position and opening a spinner hatch. Then, the lifting ropes for the exchange device may be hoisted using an act safe of the wind turbine, and the lifting ropes may be attached to hook points on the hub of the wind turbine and the act safe may be removed. Subsequently, winches on the exchange device may be used to hoist the exchange device to the hub, the exchange device may be mounted to an existing flange on the hub, wherein the mounting takes place from an outside of the hub, and a rotor turner gear may be used to turn the rotor.

The rotor is positioned such that the exchange device is aligned with the defect stator segment which is to be removed, and the rotor is fixed in this position by the rotor turner gear. Consecutively, a service technician mounts two fork guides on the stator frame structure, and by means of a geared motor, the exchange device slides two fork elements through clearance holes in the defect stator segment. Furthermore, a service technician mounts an interface clamp to the two fork elements, wherein bolts on the interface clamp are not tightened at this point in the proceedings, and removes a plurality of the bolts but not all of the bolts, particularly six of the bolts, which are fastening the back plate of the stator segment. Further, the geared motor is used to position the interface clamp at the back plate of the stator segment. Furthermore, the bolts on the interface clamp are tightened.

Subsequently, the service technician fastens the interface clamp to the back plate of the stator segment, and removes the remaining, particularly four, bolts fixing the back plate of the stator segment. Furthermore, the service technician fastens the stator segment to a base plate of the exchange device by removing the bolts fixing the front plate of the stator segment to the stator frame structure.

Then, the stator segment is slid into the exchange device by using the geared motor of the exchange device. In case of a failure of the motor or spindle, a winch may be mounted and used to retract the two fork elements and the stator segment fixed to the two fork elements.

In the following steps, the rotor lock is disengaged, the rotor is turned back to the 6 o'clock position by means of the rotor turner gear, and the bolts fastening the exchange device to the hub, are removed.

Furthermore, after being roped down from the hub, the defect segment is slid out of the exchange device, and mounted on a fixture, the interface clamp is removed, the two fork elements are retraced, a new stator segment is loaded into the exchange device, the exchange device and the new stator segment is hoisted. Subsequently, the new stator segment is installed in the opposite way of how the defect stator segment is removed.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a side view of an exchange device according to an exemplary embodiment.
Fig. 2 shows a fork guide according to an exemplary embodiment.
Fig. 3 shows an exchange device mounted on a compensating platform according to an exemplary embodiment.
Fig. 4 shows a detailed view of a hub of a wind turbine comprising an auxiliary rope coupled to a lifting crane according to an exemplary embodiment.
Fig. 5 shows a detailed view of a hub of a wind turbine, wherein three lifting ropes are coupled to the hub, according to an exemplary embodiment.
Fig. 6 shows an exchange device comprising three lifting ropes coupled to the exchange device according to an exemplary embodiment.
Fig. 7 shows a detail of the hub according to an exemplary embodiment.
Fig. 8 shows a hub with a mounted exchange device according to an exemplary embodiment.
Fig. 9 shows a stator segment together with a stator frame structure according to an exemplary embodiment.
Fig. 10 shows an exchange device mounted to a hub in a state before the fork elements are inserted into the stator segment according to an exemplary embodiment.
Fig. 11 shows an exchange device mounted to a hub in a state when the fork elements are inserted into the stator segment according to an exemplary embodiment.
Fig. 12 shows an inner space of the stator segment and a stator frame structure according to an exemplary embodiment.
Fig. 13 shows an inner space of the stator segment and a stator frame structure according to a further exemplary embodiment.
Fig. 14 shows an inner space of the stator segment and a stator frame structure according to a further exemplary embodiment.
Fig. 15 shows an inner space of the stator segment and a stator frame structure according to a further exemplary embodiment.
Fig. 16 shows an inner space of the stator segment and a stator frame structure according to a further exemplary embodiment.
Fig. 17 shows an inner space of the stator segment and a stator frame structure according to a further exemplary embodiment.
Fig. 18 shows an exchange device mounted to a hub in a state when the fork elements are extracted from the stator according to an exemplary embodiment.
Fig. 19 shows an exchange device mounted to a hub in a state when the stator segment is completely slid into the exchange device according to an exemplary embodiment.

### Detailed Description

The illustrations in the drawings are schematically. It is noted that in different figures, similar or identical elements are provided with the same reference signs.

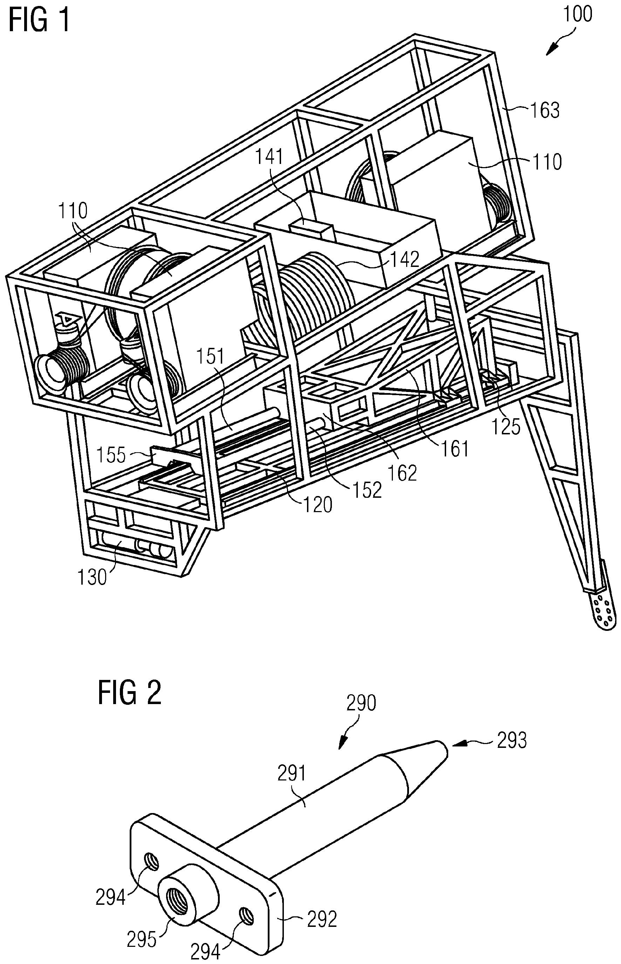

**Fig. 1** shows a side view of an exchange device 100 according to an exemplary embodiment.

The exchange device 100 comprises three winches 110, a linear guideway 120, and a motor 130 comprising a gear. The exchange device 100 further comprises a first fork element 151 and a second fork element 152 which are together guided along the linear guideway 120 via a plurality of bearings 125. The first fork element 151 and the second fork element 152 are each, at its respective free end, coupled to an interface clamp 155 which interconnects the first fork element 151 and the second fork element 152. Furthermore, the first fork element 151 and the second fork element 152 may be coupled to a stator segment sledge 161 which may slide with respect to the linear guideway 120, and which comprises a base plate 162 of the exchange device 100. Each of the above-described components are coupled to a base frame 163 of the exchange device 100.

Additionally, the exchange device 100 comprises a control unit 141 as well as a cable spool 142.

**Fig. 2** shows a fork guide 290 according to an exemplary embodiment.

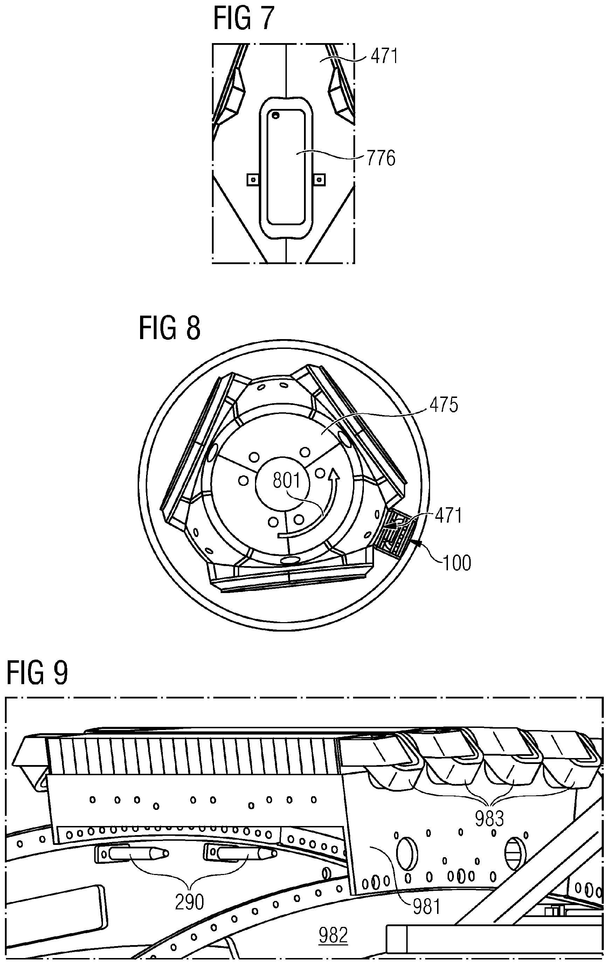

The fork guide 290 comprises a pointed end 293, a flange 292 on an opposite side relatively to the pointed end 293, and a shaft 291 interconnecting the pointed end 293 and the flange 292. The flange 292 comprises two through holes 294 for inserting respective screws for fastening the fork guide 290 to the stator frame structure 982 (shown in Fig. 9). Furthermore, the fork guide 290 comprises a further flange 295 provided on the flange 292, and extending from the flange 292 opposite to the shaft 291. With the further flange 295 the fork guide 290 may be aligned with the stator frame structure 982.

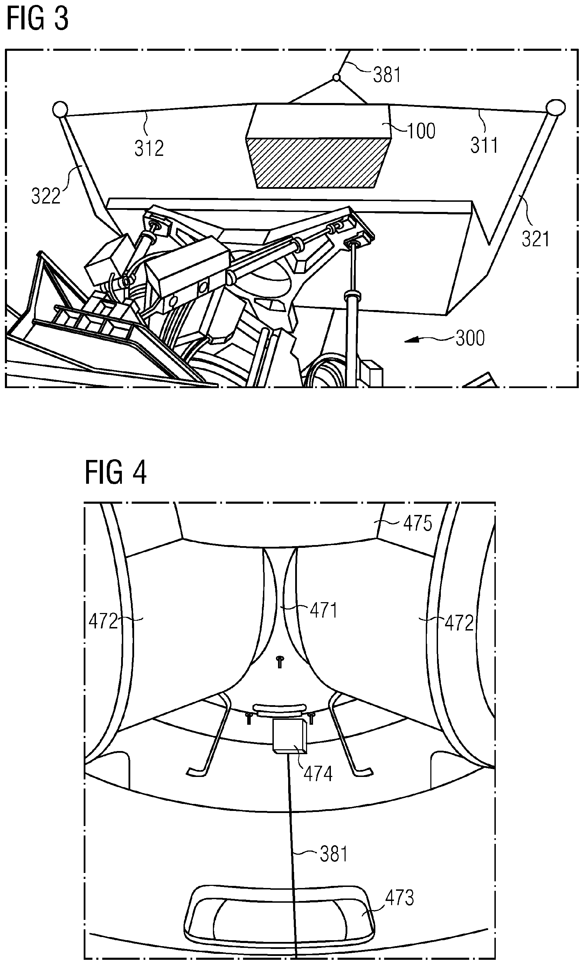

**Fig. 3** shows an exchange device 100 mounted on a compensating platform 300 according to an exemplary embodiment.

The exchange device 100 is mounted to the compensating platform 300 by a first cable 311 and a second cable 312. Additionally, the exchange device 100 is already coupled to an auxiliary rope 381 of the wind turbine. The first cable 311 is connected to a first crane boom 321 of the compensating platform 300 and the second cable 312 is connected to a second crane boom 322 of the compensating platform 300.

**Fig. 4** shows a detailed view of a hub 471 of a wind turbine comprising an auxiliary rope 381 coupled to a lifting crane 474 according to an exemplary embodiment.

Two connection pieces 472 for a respective rotor blade (schematically shown in Fig. 4) are connected to the hub 471. Additionally, it may be understood for a person skilled in the art that a third connection piece is connected to the hub (the third connection piece is not shown in Fig. 4).

Furthermore, an opening 473 in a spinner 475 of the wind turbine is shown in Fig. 4 as being positioned vertically under the axis of rotation of the wind rotor, in the closed state, which may be used to access an inner side of the wind turbine. The position where the opening 473 is positioned under the axis of rotation of the wind rotor may be referred to as a 6 o'clock position.

The auxiliary rope 381 is connected to the hub 471 by the lifting crane 474 (schematically shown in Fig. 4).The lifting crane may particularly be an act safe, and is coupled to the hub 471.

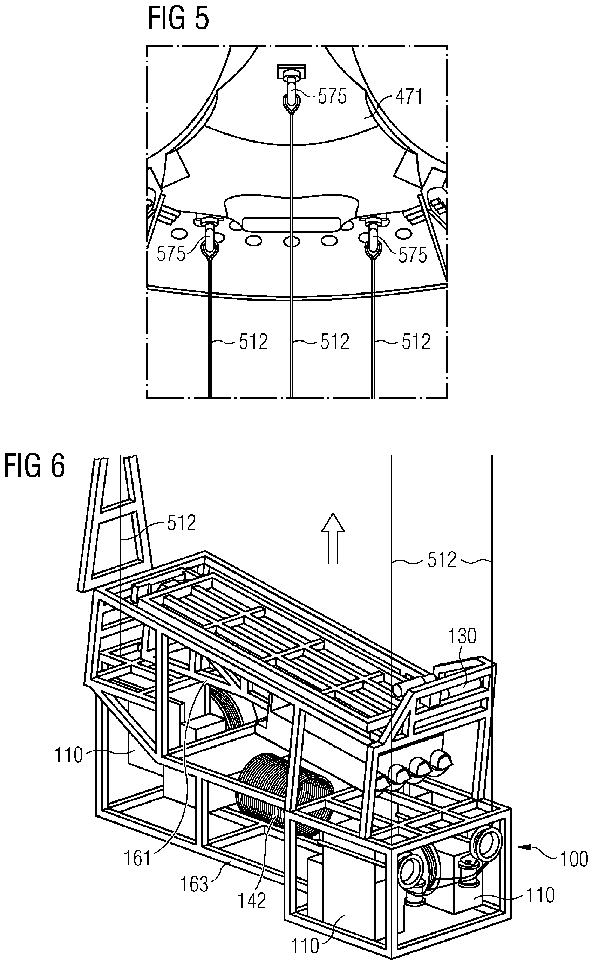

**Fig. 5** shows a detailed view of a hub 471 of a wind turbine, wherein three lifting ropes 512 are coupled to the hub 471, according to an exemplary embodiment.

Each of the three lifting ropes 512 is coupled to the hub 471 by a respective one of the three hooks 575. The three hooks 575 are particularly permanently fixed to hub 471. However, it may be understood that each of the hooks 575 may individually be exchanged in the case of a failure. The three lifting ropes 512 are fixed to the respective hooks 575 with their first ends.

**Fig. 6** shows an exchange device 100 comprising three lifting ropes 512 coupled to the exchange device 100 according to an exemplary embodiment. Each of the three lifting ropes 512 is coupled to the exchange device 100 by a respective winch 110. Each winch 110 may be controlled individually by the control unit 141. By individually controlling each of the three winches 110, the exchange device 100 may be exactly positioned with respect to the hub 471.

**Fig. 7** shows a detail of the hub 471 according to an exemplary embodiment. The hub 471 comprises at least one flange 776 to which the exchange device 100 may be fixed. As depicted in Fig. 7, the flange 776 is formed integrally with the hub 471 and comprises a planar and surface treated contact surface.

**Fig. 8** shows the hub 471 with a mounted exchange device 100 according to an exemplary embodiment. The spinner 475 may solely opened at a position where the exchange device 100 is fixed to the hub 471. The hub 471 with the mounted exchange device 100 is turned by the rotor turner gear anticlockwise as depicted by a rotation arrow 801. The hub 471 is rotated to an angular position where the stator segment to be exchanged, is positioned.

**Fig. 9** shows a stator segment 981 together with a stator frame structure 982 according to an exemplary embodiment. A service technician may be present in the inner space of the wind turbine, and may mount two fork guides 290 to the stator frame structure 982. The two fork guides 290 are distanced such that a distance between the two fork guides 290 equals a distance between the first fork element 151 and the second fork element 152. The stator segment 981 comprises a plurality of stator windings 983.

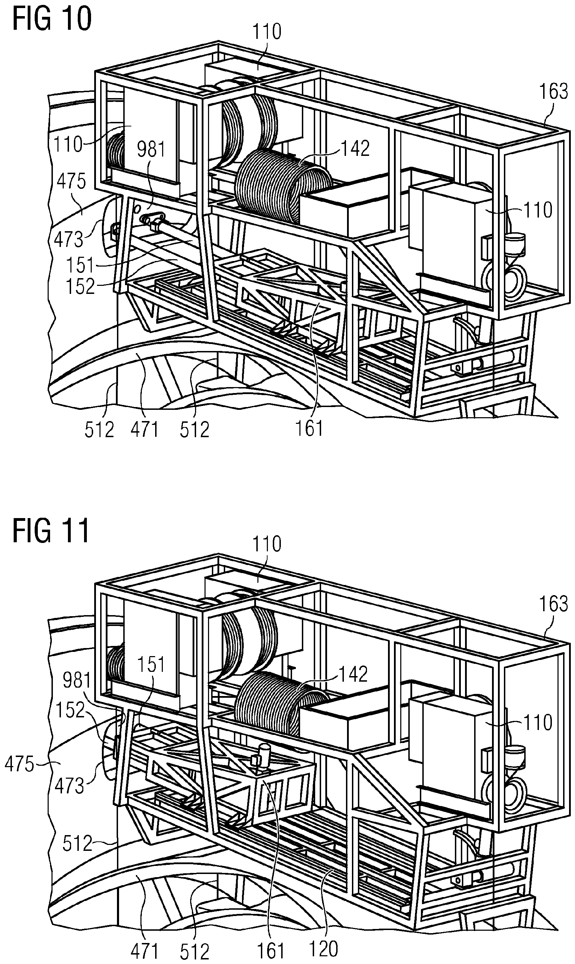

**Fig. 10** shows an exchange device 100 mounted to a hub 471 in a state before the fork elements 151, 152 are inserted into the stator segment 981 according to an exemplary embodiment. The first fork element 151 and the second fork element 152 are slide a certain distance out of the exchange device 100 by the stator segment sledge 161. The respective free ends of the first fork element 151 and the second fork element 152, respectively, are already entered into the stator segment 981 through the opening 473 in the spinner 475. The first fork element 151 and the second fork element 152 are slide by means of a geared motor.

**Fig. 11** shows an exchange device 100 mounted to a hub 471 in a state when the fork elements 151, 152 are inserted into the stator segment 981 according to an exemplary embodiment. By means of the stator segment sledge 161 the first fork element 151 and the second fork element 152 are inserted into the stator segment 981 through the opening 473 in the spinner 475. Compared to the state as depicted in Fig. 10, the stator segment sledge 161 is further slid on the linear guideway 120 towards the opening 473.

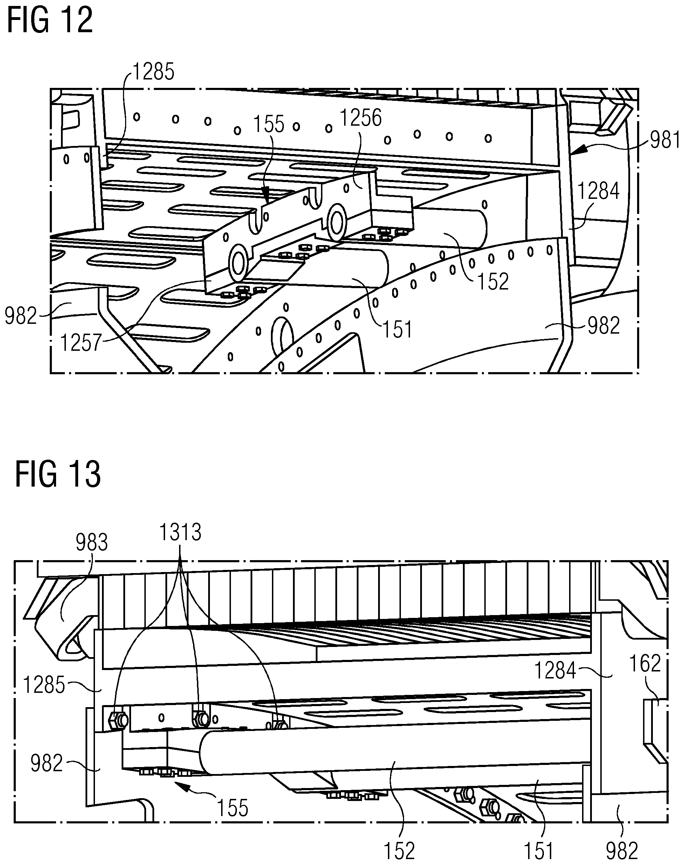

**Fig. 12** shows an inner space of the stator segment 981 and a stator frame structure 982 according to an exemplary embodiment. The first fork element 151 and the second fork element 152 are inserted through respective openings in the front plate 1284 of the stator segment into the stator segment 981. The first fork element 151 and the second fork element 152 are not completely inserted into the inner space but rather extend into the first half of the inner space between the front plate 1284 and the back plate 1285 of the stator segment 981. The respective free ends of the first fork element 151 and the second fork element 152 are coupled to the interface clamp 155. The interface clamp 155 is formed from an upper part 1256 and a lower part 1257. The upper part 1256 and the lower part 1257 are interconnected by a plurality of bolts which at this point in time of the exchange procedure are not yet tightened.

**Fig. 13** shows an inner space of the stator segment 981 and a stator frame structure 982 according to a further exemplary embodiment of the invention. The first fork element 151 and the second fork element 152 are each completely inserted into the stator segment 981. At this point of time in the exchange procedure, the interface clamp is in contact with the back plate 1285 of the stator segment 981. There are already a plurality of back plate bolts 1313 removed for allowing the contact between the interface clamp 155 and the back plate 1285. However, the back plate 1285 is still fastened to the stator frame structure 982 by at least two back plate bolts 1313 from which three back plate bolts 1313 are depicted in Fig. 13. When the first fork element 151 and the second fork element 152 are completely inserted into the inner space, the base plate 162 of the stator segment sledge 161 is in direct contact with the front plate 1284.

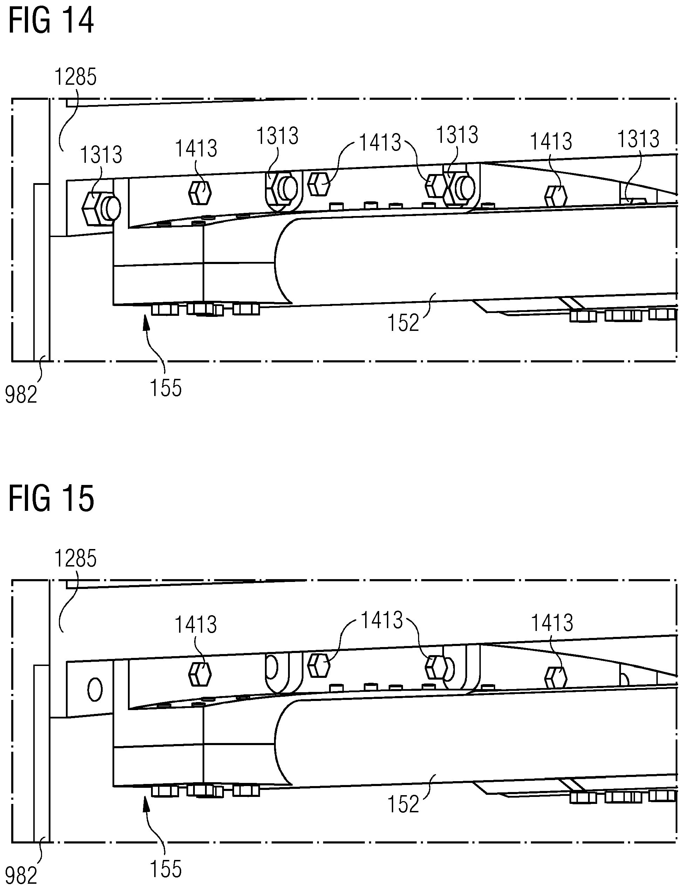

**Fig. 14** shows an inner space of the stator segment 981 and a stator frame structure 982 according to a further exemplary embodiment. Four interface clamp bolts 1413 are used to fasten the interface clamp 155 to the back plate 1285 of the stator segment 981. At this point of time in the exchange procedure, the interface clamp 155 is fastened to the back plate 1285 and at the same time the back plate 1285 is still fastened to the stator frame structure 982 by the plurality of back plate bolts 1313 from which four back plate bolt 1313 are depicted in Fig. 14.

**Fig. 15** shows an inner space of the stator segment 981 and a stator frame structure 982 according to a further exemplary embodiment. In this step of the exchange procedure, the remaining four back plate bolts 1313 which were still fastening the back plate 1285 to the stator frame structure 982 are removed. Hence, the back plate 1285 is now solely supported via the interface clamp 155 by the first fork element 151 and the second fork element 152.

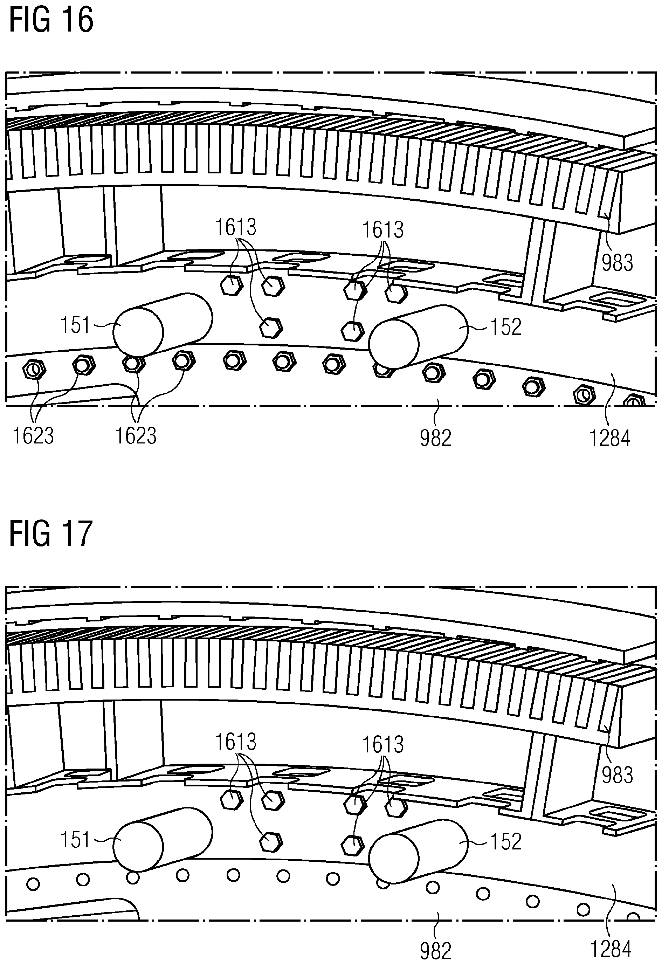

**Fig. 16** shows an inner space of the stator segment 981 and a stator frame structure 982 according to a further exemplary embodiment. Six base plate bolts 1613 are used to fasten the base plate 162 (not depicted in Fig. 16 because the base plate is behind the front plate 1284 in Fig. 16) of the stator segment sledge 161 to the front plate 1284 of the stator segment 981. At this point of time in the exchange procedure, the base plate 162 is fastened to the front plate 1284 and at the same time the front plate 1284 is still fastened to the stator frame structure 982 by a plurality of front plate bolts 1623 from which twelve front plate bolts 1623 are depicted in Fig. 16.

**Fig. 17** shows an inner space of the stator segment 981 and a stator frame structure 982 according to a further exemplary embodiment. In this step of the exchange procedure, the remaining front plate bolts 1623 which were still fastening the front plate 1284 to the stator frame structure 982 are removed. Hence, the front plate 1284 is now solely supported via the base plate 162 by the first fork element 151 and the second fork element 152.

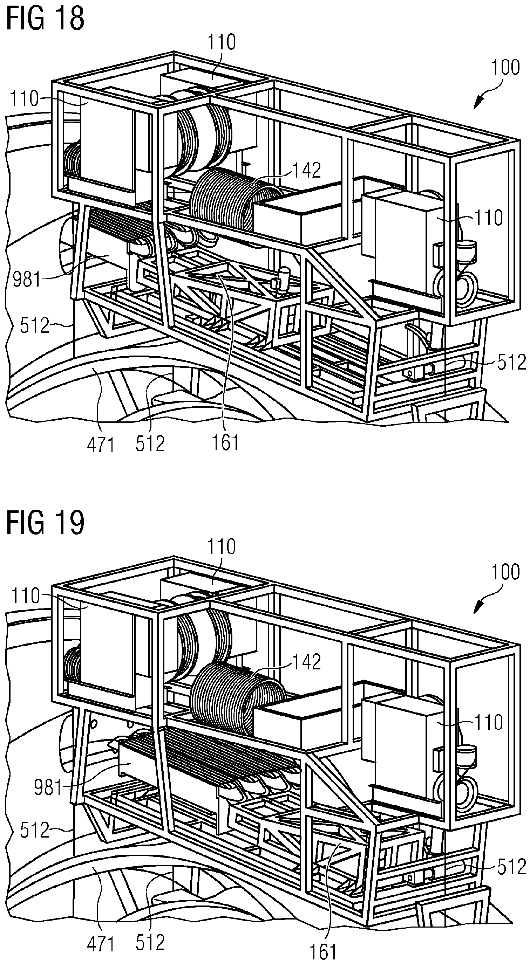

**Fig. 18** shows an exchange device 100 mounted to a hub 471 in a state when the fork elements 151, 152 are extracted from the stator according to an exemplary embodiment. By means of a geared motor, the stator segment sledge 161 is slid into the exchange device 100. As depicted in Fig. 18, the stator segment 981 to be exchanged, is slid half way into the exchange device 100 and is supported by the first fork element 151 and the second fork element 152.

**Fig. 19** shows an exchange device 100 mounted to a hub 471 in a state when the stator segment 981 is completely slid into the exchange device 100 according to an exemplary embodiment. The stator segment 981 is completely slid into the exchange device 100. Therefore, in the next step in the exchange procedure, the exchange device may be dismounted from the hub 471.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method for removing or installing a stator segment (981) of a generator being installed in a nacelle of a wind turbine, the method comprising
coupling a lifting mechanism (110) of an exchange device (100) according to claim 10, to a plurality of lifting ropes (512), wherein the plurality of lifting ropes (512) is fixed to a hub (471) of the wind turbine,
self-lifting the exchange device (100) to the hub (471) by the lifting mechanism (110),
fastening the exchange device (100) to the hub (471),
rotating the hub (471) such that the exchange device (100) is aligned with the stator segment (981) to be removed,
handling the stator segment (981) between a stator of the generator and the exchange device (100) for removing or installing the stator segment (981).

2. The method according to claim 1, further comprising
providing a lifting crane (474) fixed to the hub (471),
lifting the plurality of lifting ropes (512) to the hub (471) by using the lifting crane (474) of the wind turbine,
fastening each of the plurality of lifting ropes (512) to a respective one of a plurality of hooks (575),
wherein each of the plurality of hooks (575) is provided on the hub (471), and/or
removing the lifting crane (474).

3. The method according to claim 1 or 2,
wherein fastening the exchange device (100) to the hub (471) comprises
mounting the exchange device (100) on at least one flange (776),
wherein the at least one flange (776) is provided on the hub (471) .

4. The method according to any one of the claims 1 to 3, wherein handling the stator segment (981) between a stator of the generator and the exchange device (100) comprises
mounting at least two fork guides (290) on a stator frame structure (982) such that the at least two fork guides (290) are spaced apart from each other by the same distance as at least two fork elements (151, 152),
wherein the exchange device (100) comprises the at least two fork elements (151, 152) which are distanced to each other, and
wherein the stator comprises the stator frame structure (982) and the stator segment (981).

5. The method according to any one of the claims 1 to 4, wherein handling the stator segment (981) between a stator of the generator and the exchange device (100) further comprises
inserting at least two fork elements (151, 152) into the stator segment (981) by feeding the at least two fork elements (151, 152) through a front plate (1284) of the stator segment (981),
mounting an interface clamp (155) to the at least two fork elements (151, 152) such that the interface clamp (155) interconnects the respective adjacent ends of the at least two fork elements,
wherein the exchange device (100) comprises the at least two fork elements (151, 152) which are distanced to each other, wherein the stator comprises the stator frame structure (982) and the stator segment (981) which comprises a front plate (1284) and a back plate (1285), by which the stator segment (981) is mounted to the stator frame structure (982).

6. The method according to any one of the claims 1 to 5, wherein handling the stator segment (981) between a stator of the generator and the exchange device (100) further comprises
fastening the stator segment (981) to at least two fork elements (151, 152) of the exchange device (100), and
sliding the stator segment (981) into the exchange device (100) by the at least two fork elements (151, 152).

7. The method according to claim 6,
wherein fastening the stator segment (981) to at least two fork elements (151, 152) of the exchange device (100) comprises
removing a plurality of bolts (1313) which are fastening a back plate (1285) to a stator frame structure (982) such that at least two bolts (1313) remain for fastening the back plate (1285) to the stator frame structure (982),
providing a contact between the two fork guides (290) and the two fork elements (151, 152), respectively,
fastening an interface clamp (155) to the ends of the two fork elements (151, 152) which are located inside the stator segment (981),
fastening the back plate (1285) to the interface clamp (155), and subsequently
unfastening the remaining at least two bolts (1313) which are fastening the back plate (1285) to the stator frame structure (982),
wherein the stator comprises the stator frame structure (982) and the stator segment (981) which comprises a front plate (1284) and a back plate (1285), by which the stator segment (981) is mounted to the stator frame structure (982).

8. The method according to claim 6 or 7,
wherein fastening the stator segment (981) to at least two fork elements (151, 152) of the exchange device (100) further comprises
fastening a front plate (1284) of the stator segment (981) to a base plate (162) of the exchange device (100) such that the at least two fork elements (151, 152) support the stator segment (981), and subsequently,
unfastening the front plate (1284) from the stator frame structure (982).

9. The method according to any one of the claims 1 to 8, further comprising
turning the rotor such that the exchange device (100) is aligned vertically under the axis of rotation of the turbine rotor,
unfastening the exchange device (100) from the hub (471), and/or
roping down the exchange device (100) together with the stator segment (981) by the plurality of lifting ropes (512).

10. An exchange device (100) for removing or installing a stator segment (981) of a generator being installed in a nacelle of a wind turbine, the exchange device (100) comprising
a lifting mechanism (110) for self-lifting the exchange device (100) to a hub (471) of the wind turbine,
wherein the lifting mechanism (110) is configured for being coupled to a plurality of lifting ropes (512) fixed to the hub (471),
**characterized in that**
the exchange device (100) is configured for handling the stator segment (981) between a stator of the generator and the exchange device (100) for removing or installing the stator segment (981) after rotating the hub (471) such that the exchange device (100) is aligned with the stator segment (981) to be removed.

11. The exchange device (100) according to claim 10, further comprising
a plurality of lifting ropes (512) for fixing the exchange device (100) to a hub (471) of the wind turbine,
fastening means for fastening the exchange device (100) to the hub (471),
at least two fork elements (151, 152) for handling the stator segment (981) between a stator of the generator and the exchange device (100).

12. The exchange device (100) according to claim 10 or 11, wherein the lifting mechanism (110) comprises a plurality of winches (110), wherein the plurality of winches (110) is fixed to the exchange device (100).

13. The exchange device (100) according to any one of the claims 10 to 12, further comprising
at least one camera for monitoring a positioning of the exchange device (100) relative to the hub (471).

## Patentansprüche

1. Verfahren zum Ausbauen oder Einbauen eines Statorsegments (981) eines Generators, der in eine Gondel einer Windenergieanlage eingebaut wird, das Folgendes umfasst:
Verbinden eines Hebezeugs (110) einer Austauschvorrichtung (100) nach Anspruch 10 mit mehreren Hubseilen (512), wobei die mehreren Hubseile (512) an einer Nabe (471) der Windenergieanlage fixiert werden,
eigenständiges Anheben der Austauschvorrichtung (100) zur Nabe (471) über das Hebezeug (110),
Befestigen der Austauschvorrichtung (100) an der Nabe (471),
derartiges Drehen der Nabe (471), dass die Austauschvorrichtung (100) auf das auszubauende Statorsegment (981) ausgerichtet ist,
Transportieren des Statorsegments (981) zwischen einem Stator des Generators und der Austauschvorrichtung (100) zum Ausbauen oder Einbauen des Statorsegments (981).

2. Verfahren nach Anspruch 1, das ferner Folgendes umfasst:
Bereitstellen eines an der Nabe (471) fixierten Hebekrans (474),
Anheben der mehreren Hubseile (512) zur Nabe (471) unter Verwendung des Hebekrans (474) der Windenergieanlage,
Befestigen jedes der mehreren Hubseile (512) an jeweils einem von mehreren Haken (575),
wobei jeder der mehreren Haken (575) an der Nabe (471) vorgesehen ist, und/oder
Entfernen des Hebekrans (474).

3. Verfahren nach Anspruch 1 oder 2,
wobei das Befestigen der Austauschvorrichtung (100) an der Nabe (471) Folgendes umfasst:
Anbringen der Austauschvorrichtung (100) an mindestens einem Flansch (776),
wobei der mindestens eine Flansch (776) an der Nabe (471) vorgesehen ist.

4. Verfahren nach einem der Ansprüche 1 bis 3,
wobei das Transportieren des Statorsegments (981) zwischen einem Stator des Generators und der Austauschvorrichtung (100) Folgendes umfasst:
derartiges Anbringen von mindestens zwei Gabelführungen (290) an einer Statorrahmenkonstruktion (982), dass die mindestens zwei Gabelführungen (290) in dem gleichen Abstand zueinander liegen wie mindestens zwei Gabelelemente (151, 152),
wobei die Austauschvorrichtung (100) mindestens zwei Gabelelemente (151, 152) umfasst, die voneinander beabstandet sind, und
wobei der Stator die Statorrahmenkonstruktion (982) und das Statorsegment (981) umfasst.

5. Verfahren nach einem der Ansprüche 1 bis 4,
wobei das Transportieren des Statorsegments (981) zwischen einem Stator des Generators und der Austauschvorrichtung (100) ferner Folgendes umfasst:
Einführen von mindestens zwei Gabelelementen (151, 152) in das Statorsegment (981) durch Hindurchschieben der mindestens zwei Gabelelemente (151, 152) durch eine vordere Platte (1284) des Statorsegments (981),
derartiges Anbringen einer Spannaufnahme (155) an den mindestens zwei Gabelelementen (151, 152), dass die Spannaufnahme (155) die jeweils benachbarten Enden der mindestens zwei Gabelelemente miteinander verbindet,
wobei die Austauschvorrichtung (100) die mindestens zwei Gabelelemente (151, 152) umfasst, die voneinander beabstandet sind,
wobei der Stator die Statorrahmenkonstruktion (982) und das Statorsegment (981) umfasst, das eine vordere Platte (1284) und eine hintere Platte (1285) umfasst, über die das Statorsegment (981) an der Statorrahmenkonstruktion (982) angebracht wird.

6. Verfahren nach einem der Ansprüche 1 bis 5,
wobei das Transportieren des Statorsegments (981) zwischen einem Stator des Generators und der Austauschvorrichtung (100) ferner Folgendes umfasst:
Befestigen des Statorsegments (981) an mindestens zwei Gabelelementen (151, 152) der Austauschvorrichtung (100) und
Schieben des Statorsegments (981) mit den mindestens zwei Gabelelementen (151, 152) in die Austauschvorrichtung (100).

7. Verfahren nach Anspruch 6,
wobei das Befestigen des Statorsegments (981) an mindestens zwei Gabelelementen (151, 152) der Austauschvorrichtung (100) Folgendes umfasst:
derartiges Entfernen mehrerer Bolzen (1313), die eine hintere Platte (1285) an einer Statorgehäusekonstruktion (982) befestigen, dass mindestens zwei Bolzen (1313) zum Befestigen der hinteren Platte (1285) an der Statorgehäusekonstruktion (982) verbleiben,
Herstellen eines jeweiligen Kontakts zwischen den beiden Gabelführungen (290) und den beiden Gabelelementen (151, 152), Befestigen einer Spannaufnahme (155) an den Enden der beiden Gabelelemente (151, 152), die sich in dem Statorsegment (981) befinden,
Befestigen der hinteren Platte (1285) an der Spannaufnahme (155) und danach
Lösen der mindestens zwei verbleibenden Bolzen (1313), die die hintere Platte (1285) an der Statorgehäusekonstruktion (982) befestigen,
wobei der Stator die Statorgehäusekonstruktion (982) und das Statorsegment (981) umfasst, das eine vordere Platte (1284) und eine hintere Platte (1285) umfasst, über die das Statorsegment (981) an der Statorgehäusekonstruktion (982) angebracht wird.

8. Verfahren nach Anspruch 6 oder 7,
wobei das Befestigen des Statorsegments (981) an mindestens zwei Gabelelementen (151, 152) der Austauschvorrichtung (100) ferner Folgendes umfasst:
derartiges Befestigen einer vorderen Platte (1284) des Statorsegments (981) an einer Grundplatte (162) der Austauschvorrichtung (100), dass die mindestens zwei Gabelelemente (151, 152) das Statorsegment (981) tragen, und danach
Lösen der vorderen Platte (1284) von der Statorgehäusekonstruktion (982).

9. Verfahren nach einem der Ansprüche 1 bis 8, das ferner Folgendes umfasst:
derartiges Drehen des Rotors, dass die Austauschvorrichtung (100) unter der Rotationsachse des Turbinenrotors vertikal ausgerichtet ist,
Lösen der Austauschvorrichtung (100) von der Nabe (471) und/oder
Abseilen der Austauschvorrichtung (100) zusammen mit dem Statorsegment (981) über die mehreren Hubseile (512).

10. Austauschvorrichtung (100) zum Ausbauen oder Einbauen eines Statorsegments (981) eines Generators, der in eine Gondel einer Windenergieanlage installiert wird, wobei die Austauschvorrichtung (100) Folgendes umfasst:
ein Hebezeug (110) zum eigenständigen Anheben der Austauschvorrichtung (100) zu einer Nabe (471) der Windenergieanlage,
wobei das Hebezeug (110) für ein Verbinden mit mehreren an der Nabe (471) fixierten Hubseilen (512) konfiguriert ist,
**dadurch gekennzeichnet, dass**
die Austauschvorrichtung (100) für ein Transportieren des Statorsegments (981) zwischen einem Stator des Generators und der Austauschvorrichtung (100) zum Ausbauen oder Einbauen des Statorsegments (981) nach einem derartigen Drehen der Nabe (471) konfiguriert ist, dass die Austauschvorrichtung (100) auf das auszubauende Statorsegment (981) ausgerichtet ist.

11. Austauschvorrichtung (100) nach Anspruch 10, die ferner Folgendes umfasst:
mehrere Hubseile (512) zum Fixieren der Austauschvorrichtung (100) an einer Nabe (471) der Windenergieanlage,
Befestigungsmittel zum Befestigen der Austauschvorrichtung (100) an der Nabe (471),
mindestens zwei Gabelelemente (151, 152) zum Transportieren des Statorsegments (981) zwischen einem Stator des Generators und der Austauschvorrichtung (100).

12. Austauschvorrichtung (100) nach Anspruch 10 oder 11, wobei das Hebezeug (110) mehrere Winden (110) umfasst, die an der Austauschvorrichtung (100) fixiert sind.

13. Austauschvorrichtung (100) nach einem der Ansprüche 10 bis 12, die ferner Folgendes umfasst:
mindestens eine Kamera zum Überwachen einer Positionierung der Austauschvorrichtung (100) in Bezug auf die Nabe (471).

## Revendications

1. Procédé de désinstallation ou d'installation d'un segment de stator (981) d'un générateur installé dans une nacelle d'une éolienne, le procédé comprenant
le couplage d'un mécanisme de levage (110) d'un dispositif d'échange (100) selon la revendication 10, à une pluralité de câbles de levage (512), dans lequel la pluralité de câbles de levage (512) est fixée sur un moyeu (471) de l'éolienne,
le levage automatique du dispositif d'échange (100) jusqu'au moyeu (471) par le mécanisme de levage (110),
l'arrimage du dispositif d'échange (100) sur le moyeu (471),
la rotation du moyeu (471) de sorte que le dispositif d'échange (100) est aligné avec le segment de stator (981) à désinstaller,
la manipulation du segment de stator (981) entre un stator du générateur et le dispositif d'échange (100) pour désinstaller ou installer le segment de stator (981).

2. Procédé selon la revendication 1, comprenant en outre
la fourniture d'une grue de levage (474) fixée sur le moyeu (471),
le levage de la pluralité de câbles de levage (512) jusqu'au moyeu (471) en utilisant la grue de levage (474) de l'éolienne,
l'arrimage de chacun de la pluralité de câbles de levage (512) sur un crochet respectif d'une pluralité de crochets (575),
dans lequel chacun de la pluralité de crochets (575) est ménagé sur le moyeu (471), et/ou
la désinstallation de la grue de levage (474).

3. Procédé selon la revendication 1 ou 2,
dans lequel l'arrimage du dispositif d'échange (100) sur le moyeu (471) comprend
le montage du dispositif d'échange (100) sur au moins une bride (776),
dans lequel l'au moins une bride (776) est ménagée sur le moyeu (471).

4. Procédé selon l'une quelconque des revendications 1 à 3,
dans lequel la manipulation du segment de stator (981) entre un stator du générateur et le dispositif d'échange (100) comprend
le montage d'au moins deux guides à fourche (290) sur une structure de bâti de stator (982) de sorte que lesdits au moins deux guides à fourche (290) sont espacés l'un de l'autre par la même distance qu'au moins deux éléments à fourche (151, 152),
dans lequel le dispositif d'échange (100) comprend lesdits au moins deux éléments à fourche (151, 152) qui sont à distance l'un de l'autre, et
dans lequel le stator comprend la structure de bâti de stator (982) et le segment de stator (981).

5. Procédé selon l'une quelconque des revendications 1 à 4,
dans lequel la manipulation du segment de stator (981) entre un stator du générateur et le dispositif d'échange (100) comprend en outre
l'insertion d'au moins deux éléments à fourche (151, 152) dans le segment de stator (981) par l'acheminement desdits au moins deux éléments à fourche (151, 152) à travers une plaque avant (1284) du segment de stator (981),
le montage d'une pince d'interface (155) sur lesdits au moins deux éléments à fourche (151, 152) de sorte que la pince d'interface (155) raccorde les extrémités adjacentes respectives desdits au moins deux éléments à fourche,
dans lequel le dispositif d'échange (100) comprend lesdits au moins deux éléments à fourche (151, 152) qui sont à distance l'un de l'autre, dans lequel le stator comprend la structure de bâti de stator (982) et le segment de stator (981) qui comprend une plaque avant (1284) et une plaque arrière (1285), par lesquelles le segment de stator (981) est monté sur la structure de bâti de stator (982).

6. Procédé selon l'une quelconque des revendications 1 à 5, dans lequel la manipulation du segment de stator (981) entre un stator du générateur et le dispositif d'échange (100) comprend en outre
l'arrimage du segment de stator (981) sur au moins deux éléments à fourche (151, 152) du dispositif d'échange (100), et
le coulissement du segment de stator (981) dans le dispositif d'échange (100) par lesdits au moins deux éléments à fourche (151, 152).

7. Procédé selon la revendication 6,
dans lequel l'arrimage du segment de stator (981) sur au moins deux éléments à fourche (151, 152) du dispositif d'échange (100) comprend
la désinstallation d'une pluralité de boulons (1313) qui arriment une plaque arrière (1285) sur une structure de bâti de stator (982) de sorte qu'au moins deux boulons (1313) restent pour arrimer la plaque arrière (1285) sur la structure de bâti de stator (982),
la fourniture d'un contact entre les deux guides à fourche (290) et les deux éléments à fourche (151, 152), respectivement,
l'arrimage d'une pince d'interface (155) sur les extrémités des deux éléments à fourche (151, 152) qui sont situés à l'intérieur du segment de stator (981),
l'arrimage de la plaque arrière (1285) sur la pince d'interface (155), et par la suite
le désarrimage desdits au moins deux boulons (1313) restants qui arriment la plaque arrière (1285) sur la structure de bâti de stator (982),
dans lequel le stator comprend la structure de bâti de stator (982) et le segment de stator (981) qui comprend une plaque avant (1284) et une plaque arrière (1285), par lesquelles le segment de stator (981) est monté sur la structure de bâti de stator (982).

8. Procédé selon la revendication 6 ou 7,
dans lequel l'arrimage du segment de stator (981) sur au moins deux éléments à fourche (151, 152) du dispositif d'échange (100) comprend en outre
l'arrimage d'une plaque avant (1284) du segment de stator (981) sur une plaque de base (162) du dispositif d'échange (100) de sorte que lesdits au moins deux éléments à fourche (151, 152) portent le segment de stator (981), et par la suite,
le désarrimage de la plaque avant (1284) de la structure de bâti de stator (982).

9. Procédé selon l'une quelconque des revendications 1 à 8, comprenant en outre
la rotation du rotor de sorte que le dispositif d'échange (100) est aligné verticalement sous l'axe de rotation du rotor de turbine,
le désarrimage du dispositif d'échange (100) du moyeu (471), et/ou
la descente du dispositif d'échange (100) conjointement avec le segment de stator (981) par la pluralité de câbles de levage (512).

10. Dispositif d'échange (100) pour désinstaller ou installer un segment de stator (981) d'un générateur installé dans une nacelle d'une éolienne, le dispositif d'échange (100) comprenant
un mécanisme de levage (110) pour le levage automatique du dispositif d'échange (100) jusqu'à un moyeu (471) de l'éolienne,
dans lequel le mécanisme de levage (110) est configuré pour être couplé à une pluralité de câbles de levage (512) fixés sur le moyeu (471),
**caractérisé en ce que**
le dispositif d'échange (100) est configuré pour manipuler le segment de stator (981) entre un stator du générateur et le dispositif d'échange (100) pour désinstaller ou installer le segment de stator (981) après la rotation du moyeu (471) de sorte que le dispositif d'échange (100) est aligné avec le segment de stator (981) à désinstaller.

11. Dispositif d'échange (100) selon la revendication 10, comprenant en outre
une pluralité de câbles de levage (512) pour fixer le dispositif d'échange (100) sur un moyeu (471) de l'éolienne,
des moyens d'arrimage pour arrimer le dispositif d'échange (100) sur le moyeu (471),
au moins deux éléments à fourche (151, 152) pour manipuler le segment de stator (981) entre un stator du générateur et le dispositif d'échange (100).

12. Dispositif d'échange (100) selon la revendication 10 ou 11,
dans lequel le mécanisme de levage (110) comprend une pluralité de treuils (110), dans lequel la pluralité de treuils (110) est fixée sur le dispositif d'échange (100).

13. Dispositif d'échange (100) selon l'une quelconque des revendications 10 à 12, comprenant en outre
au moins une caméra pour surveiller un positionnement du dispositif d'échange (100) par rapport au moyeu (471).
